# DEMANDE DE BREVET EUROPEEN

(11) **EP 2 587 218 A1**
(43) Date de publication de la demande: **01.05.2013**
(21) Numéro de dépôt: 12189902.5
(22) Date de dépôt: 25.10.2012
(51) Int. Cl.: G01C 21/12, G01C 21/20, H04W 64/00

(54) **Procede de localisation d'un equipement dans un environnement et equipement correspondant**

(30) Priorité: 28.10.2011 FR 1159808
(71) Demandeur: France Télécom, 75015 Paris (FR)
(72) Inventeur: Cornaille, Clément, 06200 NICE (FR); Bruno, Adrien, 06130 GRASSE (FR)
(74) Mandataire: Regimbeau

(57) **Abrégé**

Ce procédé de localisation d'un équipement dans un environnement comprend les étapes de :
a) génération (20) d'un ensemble de particules représentant au moins une position possible de l'équipement (2) ;
b) pour chaque particule, calcul (22) d'une translation de la particule en fonction d'une mesure de déplacement de l'équipement ;
c) suppression (24) dudit ensemble des particules entrées, suite à la translation, en collision avec un obstacle au déplacement de l'équipement dans l'environnement ;
d) lorsque le nombre de particules supprimées atteint un seuil (TH), réinsertion (28) des particules supprimées dans ledit ensemble à des positions correspondant à celles de particules restantes ;
e) détection (30) parmi l'ensemble des particules d'au moins un nuage de particules positionnées en une zone limitée de l'environnement ; et
f) traitement (32) de chaque nuage de particules détecté pour déterminer une localisation possible de l'équipement (2) associée audit nuage.

## Description

La présente invention vise un procédé de localisation d'un équipement dans un environnement ainsi qu'un équipement et un programme d'ordinateur correspondants.

L'invention concerne plus particulièrement la localisation d'un utilisateur muni d'un équipement de type terminal mobile ou carte à puce dans un environnement fermé comme par exemple un hôpital, un centre commercial, une entreprise, une gare, un aéroport, un musée, un appartement, etc.

Pour localiser une personne ou un terminal dans une zone géographique donnée, on utilise conventionnellement le système de positionnement GPS ("Global Positioning System") ou le système GSM ("Global System for Mobile Communication"). Cependant, ces systèmes sont difficilement utilisables en milieu clos, en raison de leurs mauvaises performances dans un environnement intérieur, dit " indoor ". En effet, dans le cas du GPS, il est difficile de recevoir un signal correct, et dans le cas du GSM, la précision de la localisation n'est pas suffisante.

On connaît dans l'état de la technique, notamment de la demande de brevet FR288774, un procédé de localisation d'un terminal dans un environnement fermé équipé de bornes de télécommunication de type WIFI et utilisant un filtrage particulaire. Au cours du filtrage particulaire, les positions possibles du terminal sont modélisées sous forme de particules, une particule étant alors une position que le terminal qu'on cherche à localiser peut occuper.

Un procédé de filtrage particulaire conventionnel comporte en général une étape de génération d'un ensemble de particules distribuées de manière aléatoire dans l'environnement, une étape de translation de chaque particule d'un vecteur de déplacement calculé par un capteur inertiel, une étape de détermination d'un sous-ensemble de particules ayant heurté un mur de l'environnement, et une étape de déplacement des particules ayant heurté un mur à une position correspondant à un barycentre des particules n'ayant pas heurté un mur. Les étapes de translation, de détermination et de déplacement sont répétées jusqu'à ce que les particules convergent vers une même position, qui est alors considérée comme la position du terminal.

Un inconvénient d'un tel procédé de filtrage particulaire est qu'il nécessite une grande puissance de calcul qui n'est pas toujours disponible dans les équipements intégrant des systèmes de géolocalisation, notamment dans les téléphones mobiles ou dans les assistants numériques personnels.

En outre, la redistribution des particules à l'emplacement du barycentre des particules n'ayant pas heurté un mur comporte le risque de positionner les particules dans des zones impossibles, dans lesquelles l'équipement ne peut pas être présent.

La présente invention vise à améliorer la situation.

A cet effet, la présente invention concerne tout d'abord un procédé de localisation d'un équipement dans un environnement comprenant les étapes de :
a) génération d'un ensemble de particules représentant au moins une position possible de l'équipement ;
b) pour chaque particule, calcul d'une translation de la particule en fonction d'une mesure de déplacement de l'équipement réalisée par un capteur de déplacement ;
c) suppression dudit ensemble des particules entrées, suite à la translation, en collision avec un obstacle au déplacement de l'équipement dans l'environnement ;
d) lorsque le nombre de particules supprimées atteint un seuil, réinsertion des particules supprimées dans ledit ensemble à des positions correspondant à celles de particules restantes ;
e) détection parmi l'ensemble des particules d'au moins un nuage de particules positionnées en une zone limitée de l'environnement ; et
f) traitement de chaque nuage de particules détecté pour déterminer une localisation possible de l'équipement associée audit nuage.

On entend par nuage de particules un groupe ou un amas de particules très proches les unes des autres. La distance entre deux particules adjacentes d'un même nuage est notamment inférieure à une longueur de pas d'un utilisateur de l'équipement.

Grâce à la redistribution des particules disparues aux positions des particules restantes selon l'étape d) et à la représentation par nuages de particules selon l'étape e), le procédé de localisation de la présente invention permet de déterminer toutes les possibilités de localisation de l'équipement dans l'environnement. Il permet également d'éviter de fournir une position erronée de l'équipement. En outre, grâce à l'invention, le calcul de filtrage particulaire est réalisé de manière efficace facilitant sa mise en oeuvre dans un terminal mobile, notamment dans un téléphone mobile intelligent. Avantageusement, les étapes b) à e) sont répétées à chaque réalisation d'une mesure de déplacement par le capteur de déplacement.

Cela permet de faire évoluer en permanence le résultat de la localisation en fonction du déplacement de l'équipement dans l'environnement.

Au départ, il est possible soit de localiser toutes les particules au même endroit, soit de répartir les particules dans une pièce, soit de les répartir sur tout le plan de l'environnement surveillé. En les répartissant sur tout le plan, il n'est pas possible de connaître la position exacte de l'équipement tout de suite, mais au fur et à mesure des disparitions de particules et des mesures de déplacement, la position exacte de l'équipement se précise peu à peu. Par exemple, une personne âgée souhaitant être localisée chez elle, par exemple dans un but de prévention par analyse de son activité, n'a pas besoin de fournir sa position exacte au démarrage, le procédé de l'invention est capable de la retrouver pourvu qu'elle reste dans le plan de sa maison.

De préférence, le procédé comprend une étape d'association à chaque localisation possible déterminée à l'étape f) d'une probabilité de présence de l'équipement à ladite localisation.

La fourniture de probabilités associées à toutes les positions possibles de l'équipement permet d'améliorer la précision de la localisation tout en n'éliminant aucune position possible même de très faible probabilité.

Avantageusement, la probabilité de présence est fonction du nombre de particules du nuage auquel la localisation possible est associée.

Cela permet d'avoir une localisation objective fiable.

Selon une réalisation, la probabilité de présence est fonction d'une donnée supplémentaire, représentant une probabilité ou une indication que l'équipement se trouve ou non dans une zone donnée de l'environnement.

Cette donnée supplémentaire peut être un paramètre préalable dépendant de l'environnement et de l'heure de la localisation, par exemple. Ainsi, si la probabilité obtenue par le procédé selon l'invention indique que l'équipement peut se trouver dans une pièce A avec une probabilité de 60% ou dans une pièce B avec une probabilité de 40% et que par ailleurs la probabilité que l'équipement se trouve dans la pièce A à l'heure de la journée à laquelle la mesure est effectuée est de 80%, la probabilité de la présence de l'équipement dans la pièce A est renforcée à plus de 60% et la probabilité de la présence de l'équipement dans la pièce B est réduite.

La donnée supplémentaire peut également être fournie par un utilisateur de l'équipement, notamment à l'aide d'une interface homme-machine prévue dans l'équipement. L'utilisateur peut alors influer sur la valeur de la probabilité utilisée par le procédé en éliminant des positions possibles. L'utilisateur peut, par exemple, indiquer qu'il est dans la pièce A. Dans ce cas, la somme des probabilités associées aux localisations possibles dans la pièce A passe à 100% et les localisations possibles dans d'autres pièces sont éliminées.

L'utilisateur peut également désigner, au moyen de cette interface homme-machine, un nuage de particules correspondant à sa position effective.

Avantageusement, le seuil est compris entre 90% et 97% du nombre de particules générées. Il est de préférence égal à 95% dudit nombre de particules.

Ce seuil dépend de l'environnement concerné. Le seuil choisi permet un compromis entre l'efficacité du calcul et la fiabilité de la localisation. En effet, plus le seuil est élevé, plus on augmente la probabilité que les particules restantes sont sur des positions probables. Cependant, si ce seuil est trop élevé, il se peut que l'on attende trop longtemps pour replacer les particules et qu'il n'existe plus de particules sur la position réelle de l'équipement. Un seuil moins élevé est donc préférable. Les particules convergent alors moins vite vers la position réelle de l'équipement mais cela permet de réduire le risque d'éliminer la position réelle de l'équipement par erreur.

Avantageusement, l'environnement est représenté sur une carte maillée en plusieurs mailles, et l'étape de détection comprend les sous-étapes de :
i. dans chaque maille, détection de la présence d'au moins une particule dans ladite maille et dans les mailles adjacentes à ladite maille;
ii. répétition de la sous-étape i pour chacune desdites mailles adjacentes contenant au moins une particule ; et
iii. formation d'un graphe connexe reliant les mailles adjacentes dans chacune desquelles au moins une particule est présente, le graphe connexe formé représentant ainsi un nuage de particules.

Cela permet de séparer les nuages de particules de manière efficace et fiable.

De préférence, chaque maille est un carré dont le côté a une longueur correspondant à une longueur de pas d'un utilisateur de l'équipement.

Cela permet d'améliorer la distinction des nuages de particules lors du déplacement de l'utilisateur.

Les dimensions des mailles peuvent également être adaptées selon les dimensions de la carte.

Avantageusement, les particules supprimées sont réinsérées à des positions de particules restantes en distribuant les particules supprimées aléatoirement sur l'ensemble des positions des particules restantes.

Ainsi, la création de particules se fait aux endroits exacts auxquels se trouvent les particules restantes en les répartissant de manière aléatoire. A titre d'exemple, 20000 particules sont générées initialement. Lorsque le seuil de 95% est atteint, 19000 particules ont disparu et il reste 1000 particules. Ce nombre n'est pas suffisant pour que les particules continuent à se propager. Il faut alors recréer et redistribuer les 19000 particules disparues sur les 1000 particules restantes. Pour cela, chacune de ces 19000 particules va être positionnée à une position d'une particule restante choisie de manière aléatoire, soit 19 particules à repositionner en moyenne par particule restante. Par exemple, 19 particules vont être positionnées à la position de chaque particule restante de manière aléatoire.

En variante, une gaussienne peut être utilisée pour déterminer la répartition des particules recréées afin de tenir compte des éventuelles erreurs sur le déplacement et la direction des particules.

De préférence, l'étape de traitement comprend une sous-étape de calcul du barycentre de chaque nuage détecté.

Cela permet d'améliorer la précision de la localisation de l'équipement, notamment à moins d'un mètre près.

L'invention concerne également un équipement comprenant des moyens de :
a) génération d'un ensemble de particules représentant au moins une position possible de l'équipement dans un environnement ;
b) pour chaque particule, calcul d'une translation de la particule en fonction d'une mesure de déplacement de l'équipement réalisée par un capteur de déplacement ;
c) suppression dudit ensemble des particules entrées, suite à la translation, en collision avec un obstacle au déplacement de l'équipement dans l'environnement ;
d) lorsque le nombre de particules supprimées atteint un seuil, réinsertion des particules supprimées dans ledit ensemble à des positions correspondant à celles de particules restantes ;
e) détection parmi l'ensemble des particules d'au moins un nuage de particules positionnées en une zone limitée de l'environnement ; et
f) traitement de chaque nuage de particules détecté pour déterminer une localisation possible de l'équipement associée audit nuage.

Cet équipement est par exemple un téléphone mobile intelligent ou encore une carte à puce.

De préférence, l'équipement comprend ledit capteur de déplacement. Avantageusement, le capteur de déplacement comprend un moyen de géolocalisation, notamment une centrale inertielle.

La géolocalisation peut également utiliser le GPS, le GSM ou encore le WIFI.

De préférence, l'équipement comprend des moyens d'interface homme-machine.

Cela permet à un utilisateur de l'équipement d'agir sur la localisation notamment en fournissant des données supplémentaires pour améliorer sa précision et sa fiabilité. L'invention concerne aussi un programme d'ordinateur comportant des instructions pour la mise en oeuvre du procédé de l'invention lorsque le programme est exécuté par un processeur.

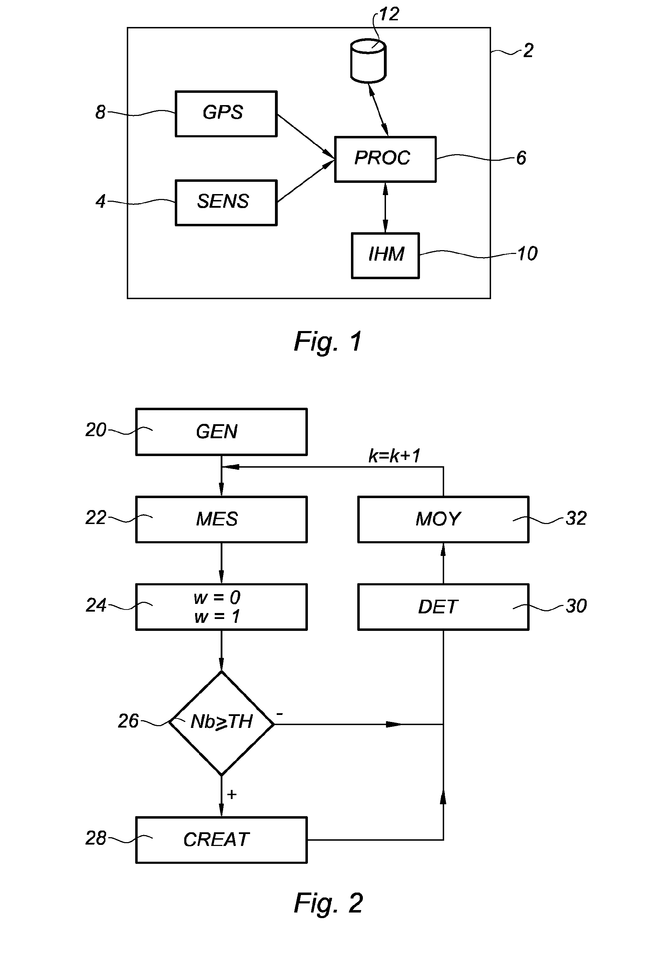

L'organigramme de la figure 2 illustre schématiquement le déroulement de ce programme d'ordinateur, pour un mode de réalisation préféré de l'invention.

Des modes de réalisation de l'invention vont maintenant être décrits de façon plus précise mais non limitative en regard des dessins annexés sur lesquels :
- la figure 1 est un schéma représentant un équipement selon un mode de réalisation de l'invention ;
- la figure 2 est un organigramme illustrant le fonctionnement du procédé de localisation de l'équipement de la figure 1 selon un mode de réalisation de l'invention ;
- la figure 3 est un schéma illustrant un premier exemple de propagation d'un ensemble de particules lors d'un déplacement de l'équipement de la figure 1 ;
- la figure 4 est un schéma illustrant un deuxième exemple de propagation d'un ensemble de particules lors d'un déplacement de l'équipement de la figure 1 ;
- la figure 5 est un schéma illustrant la disparition des particules heurtant un mur selon l'invention ;
- la figure 6 est un schéma illustrant la redistribution des particules disparues selon l'invention;
- la figure 7 est un schéma illustrant un exemple d'évolution des nuages de particules lors du déplacement de l'équipement de la figure 1 ; et
- la figure 8 est un schéma à titre d'exemple illustrant les différentes sous-étapes de la détection de nuages de particules selon un mode de réalisation de l'invention.

La figure 1 représente un équipement 2 selon un mode de réalisation préféré de l'invention. Cet équipement 2 est ici un téléphone mobile intelligent.

L'équipement 2 comprend un capteur de déplacement 4, configuré pour réaliser une mesure de déplacement de l'équipement 2, et un module de traitement 6, configuré pour déterminer une localisation de l'équipement 2 à partir de mesures de déplacement réalisées par le capteur de déplacement 4. Le capteur de déplacement 4 est de préférence une centrale inertielle.

L'équipement 2 comporte en outre ici un module de géolocalisation 8 par satellite, de type GPS, ou de géolocalisation par GSM, WIFI ou autre.

Une interface homme-machine 10 est également prévue dans l'équipement 2 pour permettre à l'utilisateur de communiquer avec ledit équipement 2. L'interface homme-machine 10 comprend, par exemple, un clavier et un écran, notamment tactile. L'équipement 2 comprend également une mémoire 12 pour le stockage de cartes, ou plans, représentant différents environnements intérieurs auxquels l'utilisateur de l'équipement 2 est susceptible de se rendre, par exemple des centres commerciaux, des musées, des aéroports, des hôpitaux, des entreprises, des habitations, etc. De manière connue, un tel plan ou carte permet de localiser les murs de l'environnement, formant obstacles au déplacement.

La suite de la description détaille les étapes du procédé de localisation de l'équipement 2 selon un mode de réalisation préféré de l'invention en référence aux figures 2 à 8.

Le procédé est par exemple initialisé lorsque l'utilisateur de l'équipement 2 entre dans un environnement de type « indoor » déterminé. L'entrée de l'utilisateur dans cet environnement peut être déterminée en utilisant les données de géolocalisation provenant du module de géolocalisation 8. En variante, l'entrée de l'utilisateur dans l'environnement peut être spécifiée par l'utilisateur à l'aide de l'interface homme-machine 10. Le module de traitement 6 extrait alors de la mémoire 12 une carte représentant l'environnement concerné.

Dans la suite de la description, il est supposé que l'utilisateur porte en permanence l'équipement 2 sur lui. Un déplacement de l'utilisateur implique ainsi un déplacement équivalent de l'équipement 2.

A l'étape 20, un ensemble de particules virtuelles, dont le nombre varie entre 20000 et 100000 par exemple, est généré. Ces particules sont placées sur la carte de l'environnement. Elles sont soit uniformément réparties sur l'ensemble des positions possibles de l'utilisateur (c'est-à-dire de l'équipement), soit précisément sur la position de l'utilisateur si celle-ci est connue.

A l'étape 22, le capteur de déplacement 4 réalise une mesure de déplacement de l'utilisateur et fournit au module de traitement 6 des informations sur le déplacement en coordonnées polaires. Ces informations comprennent notamment la distance de déplacement et son orientation. De préférence, cette mesure est réalisée périodiquement avec une périodicité très faible.

A titre d'exemple, le capteur de déplacement 4 est capable de fournir une mesure de déplacement à chaque pas de l'utilisateur. Il fournit alors la distance pour chaque pas d'environ 40 à 60 cm selon la taille de l'utilisateur. Il fournit également l'angle de la direction du déplacement en effectuant une moyenne des angles entre le pas considéré et le pas précédent.

Pour chaque particule générée, un calcul d'une translation de la particule est alors effectué, par le module de traitement 6, conformément à la distance et à l'orientation mesurées tout en prenant en compte les éventuelles erreurs sur la mesure de déplacement en coordonnées polaires. Statistiquement, chaque particule subit une erreur aléatoire pour intégrer tous les déplacements possibles de l'utilisateur.

Selon une réalisation préférée, à chaque particule est attribuée une valeur statistique de direction et de déplacement <P(i,j,k+1)(ρ,θ)>= <P(i,j,k)(ρ,θ)> + pcos(θ) <i>+psin(θ) <j>, où k correspond au numéro de pas ou d'avancement des particules, P représente la fonction particule qui est une fonction Dirac centrée aux coordonnées i et j et (ρ,θ) sont respectivement les coordonnées polaires de l'avancement de la particule, ces valeurs étant données aléatoirement.

A titre d'exemple d'une répartition aléatoire des particules intégrant les déplacements possibles de l'utilisateur, la direction prend pour chaque particule les valeurs comprises entre -30° et +30° autour de la valeur d'angle mesurée et la distance prend les valeurs comprises entre -40 cm et +40 cm autour de la distance moyenne de pas mesurée. Les valeurs d'angle sont de préférence fournies de façon absolue ici. En effet, si l'utilisateur ne change pas de cap, l'erreur sur l'angle ne variera pas d'un pas sur l'autre pour toutes les particules.

Ainsi, dans un environnement sans murs ni autre obstacle, si 20000 particules se déplacent à partir d'un point correspondant à la position initiale de l'utilisateur, un nuage de particules se forme et se déplace en s'élargissant dans une direction moyenne donnée correspondant à la valeur mesurée par le capteur 4.

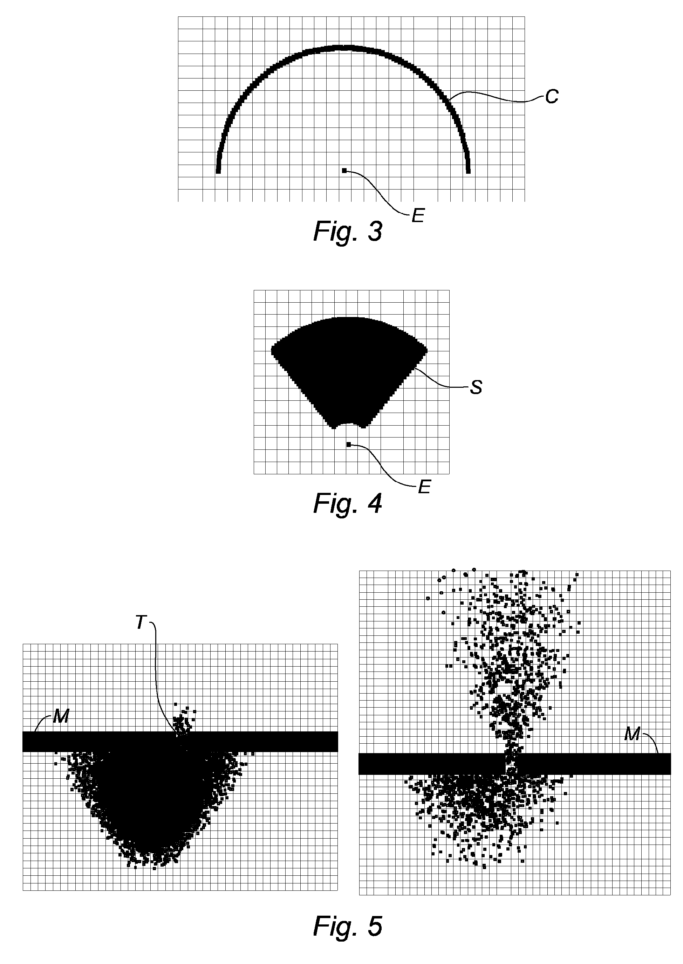

Les figures 3 et 4 illustrent cette propagation de l'ensemble des 20000 particules dans deux situations différentes.

Dans l'exemple de la figure 3, la propagation se fait sur une grille de 10 cm de côté. La position de départ de l'utilisateur est supposée être en bas au centre, à l'endroit E. Les 20000 particules se trouvent donc bien au même endroit E initialement. Après un déplacement vers le haut de l'utilisateur de 1 m mesuré avec un capteur de déplacement qui ne fait pas d'erreur sur la distance mais qui fournit la direction avec une erreur de + ou - 90°, les particules sont réparties sur un demi cercle C.

Dans l'exemple de la figure 4, la propagation se fait également sur une grille de 10 cm de côté. La position de départ de l'utilisateur est supposée être en bas au centre, à l'endroit E. Les 20000 particules se trouvent donc bien au même endroit E initialement. Après un déplacement vers le haut de l'utilisateur de 60 cm mesuré avec un capteur de déplacement qui fait une erreur sur la distance de + ou -40 cm et qui fournit la direction avec une erreur de + ou - 40°, les particules sont réparties sur un secteur d'angle S de 80° borné entre 20 cm et 1 m.

De retour à la figure 2, à l'étape 24, une pondération des états possibles des particules est réalisée par le module de traitement 6 en supprimant de l'ensemble de particules générées les particules entrées, suite à la translation, en collision avec un obstacle au déplacement de l'équipement dans l'environnement.

Un obstacle au déplacement est par exemple un mur, un meuble, une cavité ou autre entité ou objet qui empêche le déplacement de l'équipement et/ou de l'utilisateur porteur de cet équipement.

Un plan de l'environnement, ou, plus généralement, un ensemble de données contenant une description de cet environnement et des obstacles que cet environnement contient, est par exemple mémorisé dans l'équipement 2, puis utilisé pour obtenir une localisation de ces obstacles et/ou déterminer l'espace occupé par ces obstacles.

Pour effectuer la pondération, un poids nul est attribué à chaque particule entrée en collision avec un obstacle (mur ou autre) pour indiquer que le déplacement est impossible dans cette direction. Un poids égal à 1 est attribué à toutes les autres particules. La figure 5 illustre un exemple de cette pondération.

La partie de gauche de la figure 5 montre un déplacement d'un ensemble de particules vers le haut. A la rencontre d'un mur M comprenant un trou T, les particules heurtant le mur M disparaissent, suite à la pondération effectuée à l'étape 24. Le nombre de particules est ainsi réduit de façon conséquente suite au passage au travers du mur M, ainsi que cela est représenté sur la partie de droite de la figure 5.

A l'étape 26, le nombre de particules disparues est comparé à un seuil TH, égal ici à 95% du nombre de particules générées initialement à l'étape 20.

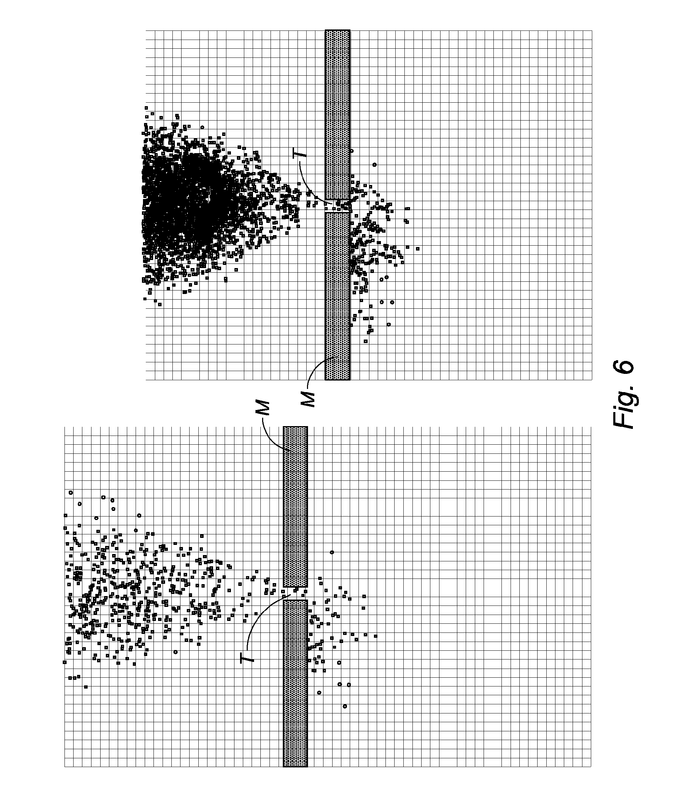

Si le nombre de particules disparues a atteint le seuil TH, les particules supprimées sont recréées et réinsérées aléatoirement à des positions correspondant à celles des particules restantes par le module de traitement 6 à l'étape 28. Si le nombre de particules disparues n'a pas encore atteint le seuil TH, le procédé passe directement à l'étape 30. La figure 6 illustre l'étape 28 de réinsertion.

La partie de gauche de la figure 6 montre la réduction du nombre de particules au passage d'un mur lors d'un déplacement du bas vers le haut de la carte. Lorsque 95% des particules ont disparu, ces particules sont recréées aux emplacements exacts des particules restantes, comme cela est visible sur la partie de droite. A titre d'exemple, 20000 particules sont générées initialement. Lorsque le seuil de 95% est atteint, 19000 particules ont disparu et il reste 1000 particules. Lors de l'étape de réinsertion 28, 19 particules sont donc positionnées à une position d'une particule restante choisie de manière aléatoire.

En alternative, au lien d'utiliser la position exacte d'une particule restante, les positions des particules recréées peuvent être réparties de manière aléatoire autour de chaque particule restante, par exemple selon une distribution gaussienne. La zone « autour » d'une position est dans ce cas définie par une gaussienne centrée sur la position en question. Dans un objectif de réduction des temps de calcul, pour éviter de recalculer de nouvelles positions, il est cependant préférable de réintroduire les particules aux mêmes positions que les particules restantes, mais en répartissant aléatoirement les particules recréées sur l'ensemble des positions des particules restantes.

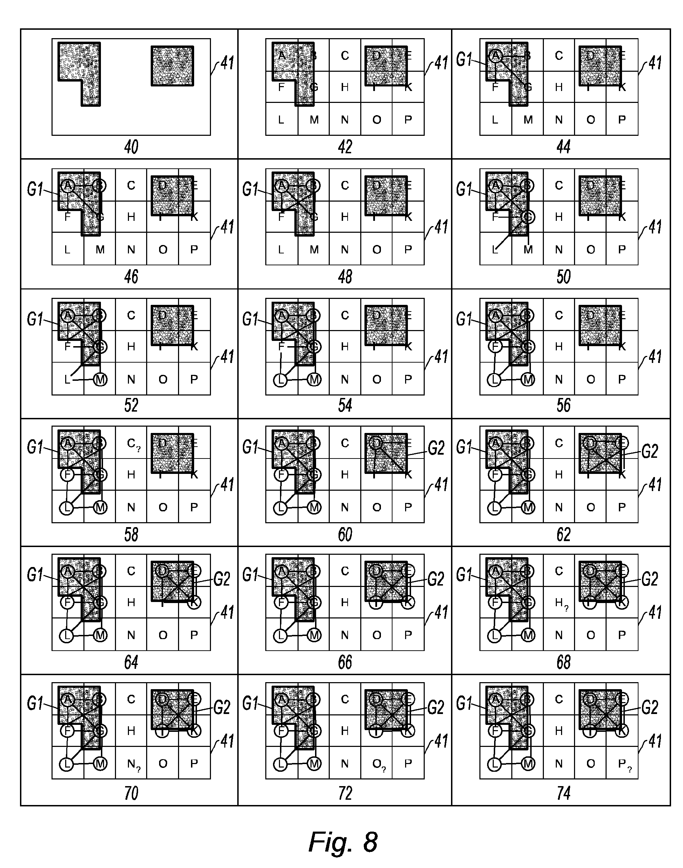

A l'étape 30, le module de traitement 6 détecte parmi l'ensemble des particules des nuages de particules distincts correspondant chacun à une position possible de l'utilisateur. Chaque nuage de particules est restreint à une zone limitée de l'espace et la distance entre deux particules adjacentes d'un même nuage est limitée, par exemple inférieure à la longueur d'un pas de l'utilisateur de l'équipement. A titre d'exemple, la méthode de détection des nuages de particules utilise la notion de graphes connexes pour représenter les nuages de particules, ainsi que cela sera décrit en référence à la figure 8.

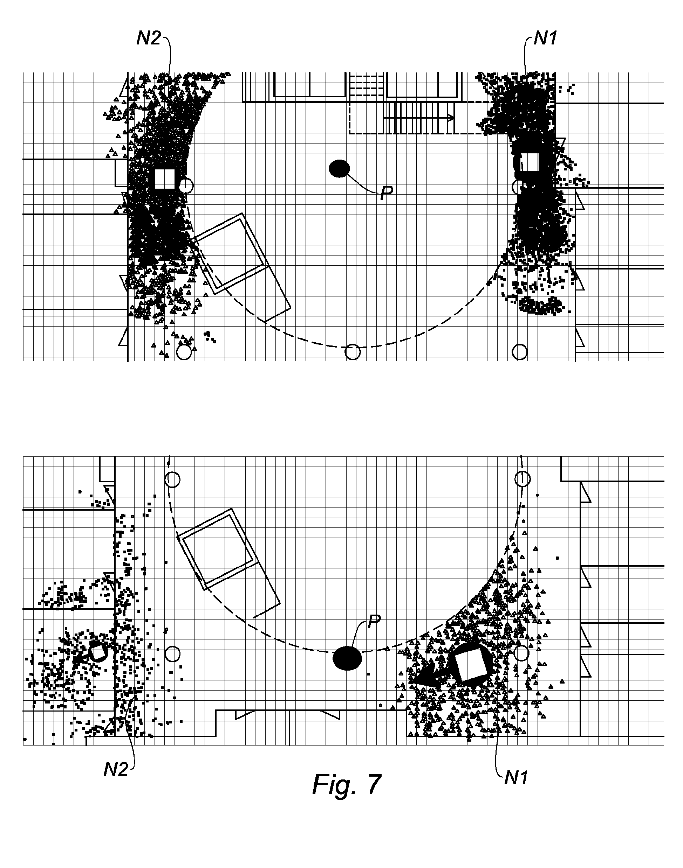

La figure 7 montre une configuration dans laquelle deux nuages N1, N2 de particules sont détectés, la position réelle de l'utilisateur correspondant au nuage N1. Le cercle central large en pointillés représente une zone interdite à la marche.

Sur la partie supérieure de la figure 7, les deux nuages N1 et N2 sont équivalents du point de vue de la quantité de particules qu'ils comprennent. Le point central P correspond à la position moyenne de toutes les particules. C'est cette position qui aurait été fournie par un procédé de filtrage particulaire conventionnel. Or, elle est impossible puisqu'elle est dans la zone interdite.

La partie inférieure de la figure 7 illustre l'évolution de la partie supérieure après quelques pas supplémentaires de l'utilisateur. La quantité de particules du nuage N2 a considérablement baissé, rendant la position de gauche de moins en moins probable. La position moyenne des particules illustrée par le point P s'est rapprochée du nuage N1. Si l'utilisateur continue de tourner autour du cercle central, un plus grand nombre de particules du nuage N2 disparaîtra par collision avec les murs de la pièce. Enfin, il ne restera que le nuage N1 pour matérialiser la vraie position de l'utilisateur. Un nouveau nuage pourra également apparaître dans le cas de deux chemins possibles pour prendre en compte une nouvelle possibilité de localisation de l'utilisateur.

La figure 8 illustre les étapes de la méthode mise en oeuvre par le module de traitement 6 pour réaliser la détection de nuages de particules de l'étape 30.

Cette méthode utilise la notion de graphes connexes pour représenter les nuages de particules.

En théorie des graphes, un graphe non orienté est dit connexe si, quels que soient les sommets u et v (intersections de chemins) dudit graphe, il existe un chemin de u vers v, c'est-à-dire s'il existe une suite d'arêtes permettant d'atteindre v à partir de u.

Sur la partie référencée 40 de la figure 8 est représentée une carte 41 de 800 pixels de large et de 480 pixels de haut sur une échelle de 80 pixels par mètre. Cette carte correspond ainsi à un environnement de 10 mètres sur 6 mètres. Sur cette carte, les zones pleines représentent des particules correspondant aux positions possibles de l'utilisateur.

Lors d'une étape 42, la carte est maillée, c'est-à-dire quadrillée, par la création de mailles tous les 2 mètres, par exemple. Ainsi, 15 mailles notées A, B, C,..., O, P sont créées.

A l'étape 44, le module de traitement 6 commence par la première maille A en haut à gauche et vérifie si cette maille comprend au moins une particule. Comme la maille A contient effectivement des particules, un premier graphe G1 est créé. Les mailles adjacentes B, F, G à la maille A sont alors testées pour savoir si elles contiennent des particules. Ici, les trois mailles B, F, G en contiennent. Elles sont alors rajoutées au premier graphe.

Ensuite, les mailles adjacentes à la maille B sont testées aux étapes 46, 48. Les mailles F et G sont adjacentes à la maille B et contiennent des particules. Cependant, ces mailles font déjà partie du premier graphe.

A l'étape 50, les mailles adjacentes à la maille G sont testées. Les mailles L et M sont adjacentes à la maille G et contiennent des particules. Elles sont alors rajoutées au premier graphe.

Les mailles adjacentes à chacune des mailles M, L, F sont alors testées de la même manière aux étapes 52, 54, 56 respectivement.

Après avoir fini de parcourir le premier graphe, l'algorithme passe, à l'étape 58, à la maille suivante après A. Il s'agit de la maille B qui a déjà été testée. L'algorithme passe alors à la maille suivante, c'est-à-dire C. La maille C ne contient pas de particule. L'algorithme passe alors à la maille suivante D.

Comme la maille D contient des particules et n'a pas encore été testée, un deuxième graphe G2 est créé à l'étape 60 et l'algorithme répète la même procédure que pour le premier graphe aux étapes 62, 64.

Après avoir fini de parcourir le deuxième graphe, l'algorithme passe, à l'étape 66, à la maille suivante après D. Il s'agit de la maille E qui a déjà été testée. L'algorithme passe alors aux mailles suivantes F, G, H.

A l'étape 68, le test de la maille H montre qu'elle ne contient pas de particule. L'algorithme passe alors aux mailles suivantes I, K, L, M, N.

A l'étape 70, le test de la maille N montre qu'elle ne contient pas de particule. L'algorithme passe alors à la maille suivante O.

A l'étape 72, le test de la maille O montre qu'elle ne contient pas de particule. L'algorithme passe alors à la maille suivante P.

A l'étape 74, le test de la maille P montre qu'elle ne contient pas de particule. Comme il s'agit de la dernière maille de la carte, l'algorithme s'arrête.

Ainsi, deux graphes G1, G2 contenant les sommets (A B F G L M) et (D E I K) sont obtenus. Ces deux graphes représentent deux nuages de particules distincts. Le nombre de particules contenues dans chaque maille est également comptabilisé par l'algorithme, ce qui permet d'associer, à l'étape 30, à chaque nuage une probabilité de présence de l'utilisateur dans la zone géographique couverte par le nuage.

La probabilité de présence de l'utilisateur, c'est-à-dire de l'équipement, dans cette zone est ainsi une fonction du nombre de particules du nuage associé.

En outre, le calcul de cette probabilité de présence peut prendre en compte une donnée supplémentaire représentant notamment une probabilité ou une indication que l'équipement se trouve ou non dans ladite zone.

Cette donnée supplémentaire peut être un paramètre préalable dépendant de l'environnement et de l'heure de la localisation, par exemple. Ainsi, si la probabilité obtenue en fonction du nombre de particules dans chaque nuage détecté indique que l'équipement peut se trouver dans une pièce A avec une probabilité de 60% ou dans une pièce B avec une probabilité de 40% et que par ailleurs la probabilité que l'équipement se trouve dans la pièce A à l'heure de la journée à laquelle la mesure est effectuée est de 80%, la probabilité de la présence de l'équipement dans la pièce A est renforcée à plus de 60% et la probabilité de la présence de l'équipement dans la pièce B est réduite.

De retour à la figure 2, à l'étape 32, le module de traitement 6 traite les deux nuages détectés pour déterminer une localisation possible de l'utilisateur. Ce traitement consiste de préférence à calculer le barycentre de chaque nuage, grâce à la connaissance des particules contenues dans les mailles de ce nuage.

En variante, le traitement peut consister simplement à colorer différemment les particules appartenant à différents nuages.

Les étapes 22 à 32 sont ensuite répétées lors de la mesure suivante du déplacement de l'utilisateur, correspondant de préférence à un avancement d'un pas.

Bien entendu d'autres modes de réalisation sont envisageables.

Plus particulièrement, le capteur de déplacement peut être distinct de l'équipement tout en étant porté par l'utilisateur, par exemple placé dans la poche dudit utilisateur. Dans ce cas, le capteur de déplacement communique les résultats de mesure, notamment la distance et l'orientation du déplacement, à l'équipement par l'intermédiaire d'une liaison de type Bluetooth, par exemple.

## Revendications

1. Procédé de localisation d'un équipement (2) dans un environnement comprenant les étapes de :
a) génération (20) d'un ensemble de particules représentant au moins une position possible de l'équipement (2) ;
b) pour chaque particule, calcul (22) d'une translation de la particule en fonction d'une mesure de déplacement de l'équipement réalisée par un capteur de déplacement (4) ;
c) suppression (24) dudit ensemble des particules entrées, suite à la translation, en collision avec un obstacle au déplacement de l'équipement dans l'environnement ;
d) lorsque le nombre de particules supprimées atteint un seuil (TH), réinsertion (28) des particules supprimées dans ledit ensemble à des positions correspondant à celles de particules restantes ;
e) détection (30) parmi l'ensemble des particules d'au moins un nuage de particules positionnées en une zone limitée de l'environnement ; et
f) traitement (32) de chaque nuage de particules détecté pour déterminer une localisation possible de l'équipement (2) associée audit nuage.

2. Procédé selon la revendication 1, dans lequel les étapes b) à e) sont répétées à chaque réalisation d'une mesure de déplacement par le capteur de déplacement (4).

3. Procédé selon la revendication 1 ou 2, comprenant une étape d'association (30) à chaque localisation possible déterminée à l'étape f) d'une probabilité de présence de l'équipement à ladite localisation.

4. Procédé selon la revendication 3, dans laquelle la probabilité de présence est fonction du nombre de particules du nuage auquel la localisation possible est associée.

5. Procédé selon la revendication 3 ou 4, dans laquelle la probabilité de présence est fonction d'une donnée supplémentaire, représentant une probabilité ou une indication que l'équipement se trouve ou non dans une zone donnée de l'environnement.

6. Procédé selon l'une quelconque des revendications précédentes, dans lequel le seuil (TH) est compris entre 90% et 97% du nombre de particules générées.

7. Procédé selon l'une quelconque des revendications précédentes, dans lequel l'environnement est représenté sur une carte (41) maillée en plusieurs mailles, et l'étape de détection comprend les sous-étapes de :
i. dans chaque maille, détection de la présence d'au moins une particule dans ladite maille et dans les mailles adjacentes à ladite maille;
ii. répétition de la sous-étape i pour chacune desdites mailles adjacentes contenant au moins une particule ; et
iii. formation d'un graphe connexe (G1, G2) reliant les mailles adjacentes dans chacune desquelles au moins une particule est présente, le graphe connexe formé représentant ainsi un nuage de particules.

8. Procédé selon la revendication 7, dans lequel chaque maille est un carré dont le côté a une longueur correspondant à une longueur de pas d'un utilisateur de l'équipement (2).

9. Procédé selon l'une quelconque des revendications précédentes, dans lequel les particules supprimées sont réinsérées à des positions de particules restantes en distribuant les particules supprimées aléatoirement sur l'ensemble des positions des particules restantes.

10. Procédé selon l'une quelconque des revendications précédentes, dans lequel l'étape de traitement (32) comprend une sous-étape de calcul du barycentre de chaque nuage détecté.

11. Equipement (2) comprenant des moyens de :
a) génération (6) d'un ensemble de particules représentant au moins une position possible de l'équipement (2) dans un environnement;
b) pour chaque particule, calcul (6) d'une translation de la particule en fonction d'une mesure de déplacement de l'équipement (2) réalisée par un capteur de déplacement (4);
c) suppression (6) dudit ensemble des particules entrées, suite à la translation, en collision avec un obstacle au déplacement de l'équipement dans l'environnement;
d) lorsque le nombre de particules supprimées atteint un seuil, réinsertion (6) des particules supprimées dans ledit ensemble à des positions correspondant à celles de particules restantes ;
e) détection (6) parmi l'ensemble des particules d'au moins un nuage de particules positionnées en une zone limitée de l'environnement ; et
f) traitement (6) de chaque nuage de particules détecté pour déterminer une localisation possible de l'équipement (2) associée audit nuage.

12. Equipement selon la revendication 11, comprenant ledit capteur de déplacement (4).

13. Equipement selon la revendication 12, dans lequel le capteur de déplacement (4) comprend un moyen de géolocalisation, notamment une centrale inertielle.

14. Programme d'ordinateur comportant des instructions pour la mise en oeuvre du procédé selon l'une quelconque des revendications 1 à 10, lorsque le programme est exécuté par un processeur (6).
